# EUROPÄISCHE PATENTSCHRIFT

(11) **EP 0 630 288 B1**
(45) Veröffentlichungstag und Bekanntmachung des Hinweises auf die Patenterteilung: **17.01.1996**
(21) Anmeldenummer: 93905320.3
(22) Anmeldetag: 08.03.1993
(51) Int. Cl.: B01J 21/04, B01J 35/10, B01J 32/00, B01J 37/08, B01J 23/89, C02F 1/70

(54) **ABRIEBFESTER KATALYSATOR-TRÄGER**
ABRASION-RESISTANT CATALYST CARRIER
SUPPORT DE CATALYSEUR RESISTANT A L'ABRASION

(30) Priorität: 13.03.1992 DE 4207961
(43) Veröffentlichungstag der Anmeldung: 28.12.1994
(73) Patentinhaber: Solvay Umweltchemie GmbH, D-30173 Hannover (DE)
(72) Erfinder: BONSE, Dirk, D-3160 Lehrte (DE); BRETZ, Karl-Heinz, D-3070 Nienburg (DE); DERLETH, Helmut, D-3070 Nienburg (DE); SELL, Michael, D-3150 Peine (DE)
(74) Vertreter: Lauer, Dieter, Dr.
(86) Internationale Anmeldenummer: EP9300525
(87) Internationale Veröffentlichungsnummer: WO9317786

(56) Entgegenhaltungen:
- EP-A- 0 359 074
- DE-A- 2 442 318
- US-A- 4 722 920

## Beschreibung

Die Erfindung bezieht sich auf einen abriebfesten Katalysator-Träger, damit hergestellte Trägerkatalysatoren und ihre Verwendung.

Katalysator-Träger können bekanntermaßen aus verschiedensten Materialien hergestellt werden. Sehr häufig wird aktiviertes Aluminiumoxid als Träger eingesetzt. Typischerweise liegt es dann in der Modifikation "gamma" vor. Nachteil bislang bekannter aus Aluminiumoxid bestehender Träger ist ihre verhältnismäßig geringe Abriebfestigkeit.

Die deutsche Offenlegungsschrift DE-OS 24 42 318 (US-A 41 02 978) beschreibt Tonerde-Katalysatorträger. Zu ihrer Herstellung wird ein Feststoffgemisch gebrannt, welches 30 bis 80 Gew.-% gebrannten Gibbsit umfaßt, der nach dem Brennen in Form von Böhmit und/oder kappa- oder alpha-Tonerde vorliegt. Mindestens 20 Gew.-% des Gemisches soll mikrokristalliner Böhmit sein; 0 bis 50 Gew.-% des Gemisches kann desensibilisierter mikrokristalliner Böhmit sein. Die gebrannten Tonerdekörper liegen als gamma-, kappa-, chi-, rho-, delta- oder alpha-Form oder deren Gemischen vor; Tonerden in der delta- oder alpha-Form sind bevorzugt. Gemäß einem Beispiel wird Tonerde der Modifikation chi und rho hergestellt.

Aufgabe der vorliegenden Erfindung ist es, Katalysator-Träger mit verbesserter Abriebfestigkeit anzugeben. Diese Aufgabe wird durch den in den Ansprüchen angegebenen abriebfesten Katalysator-Träger gelöst.

Der erfindungsgemäße Katalysator-Träger besteht im wesentlichen aus Aluminiumoxid (Al₂O₃) und ist durch folgende Eigenschaften gekennzeichnet:
aI) Er besteht aus Aluminiumoxid der Modifikationen "gamma" und "kappa", wobei die Modifikation "delta" maximal bis zu 10 Gew.-% enthalten ist oder,
aII) er besteht aus Aluminiumoxid der Modifikationen "theta" und "kappa", wobei die Modifikation "alpha" maximal bis zu 10 Gew.-% enthalten ist;
b) die Verteilung der Porendurchmesser weist ein Maximum (monomodale Porenverteilung) oder zwei Maxima (bimodale Porenverteilung) im Bereich zwischen 100 und 1500 Å auf;
c) die Oberfläche, berechnet nach der Quecksilber-Porosimetrie-Methode, liegt zwischen 33 und 63 m²/g.

Katalysator-Träger, die die vorstehenden Eigenschaften aufweisen, zeichnen sich durch eine sehr hohe Abriebfestigkeit aus.

Gemäß einer Variante besteht der Träger aus den Modifikationen "gamma" und "kappa". Ihr Gewichtsverhältnis liegt vorzugsweise zwischen 34:66 und 33:77 .

Gemäß der anderen, besonders bevorzugten Variante besteht der Träger aus den Modifikationen "kappa" und "theta". Ihr Gewichtsverhältnis liegt vorzugsweise zwischen 30:70 und 10:90.

Der Träger kann in üblichen Trägerformen vorliegen, als Monolith oder als Schüttgütträger in üblichen Formen, beispielsweise in Form von Hohlkugeln, Zylindern, Halbkugeln, als Pulver etc. vor. Bevorzugt liegt er in Kugelform vor. Der Durchmesser der Kugeln liegt zweckmäßig zwischen 0,1 mm und 20 mm, vorzugsweise zwischen 0,1 und 1,0 mm und insbesondere zwischen 0,3 und 0,8 mm.

Ein ganz besonders bevorzugter Katalysator-Träger ist dadurch gekennzeichnet, daß er völlig frei ist von Aluminiumoxid der Modifikationen "gamma" und "delta", daß die Modifikation "alpha" allenfalls als in geringen Mengen vorliegende Verunreinigung enthalten ist, daß die Verteilung der Porendurchmesser ein Maximum (monomodale Porenverteilung) im Bereich von 700 bis 1500 Å oder 2 Maxima (bimodale Porenverteilung) im Bereich von 100 bis 1 500 Å aufweist, daß der mittlere Porendurchmesser 300 bis 500 Å beträgt und die Oberfläche, berechnet nach der Quecksilber-Methode, zwischen 41 und 50 m²/g beträgt.

Dieser Katalysator-Träger ist deshalb besonders vorteilhaft, da er eine gute Diffusion des katalytisch zu behandelnden Materials in die inneren Bereiche ermöglicht.

Im Folgenden wird die Herstellung des erfindungsgemäßen Katalysator-Trägers beschrieben.

Das erfindungsgemäße Verfahren zur Herstellung des erfindungsgemäßen, im wesentlichen aus Aluminiumoxid (Al₂O₃) bestehenden Katalysator-Trägers dessen Verteilung der Porendurchmesser ein Maximum (monomodale Porenverteilung) oder 2 Maxima (bimodale Porenverteilung) im Bereich zwischen 100 und 1500 Å aufweist und dessen Oberfläche, berechnet nach der Quecksilber-Methode, zwischen 33 und 63 m²/g beträgt, wobei man amorphes Aluminiumoxid (Modifikation "chi") mit Aluminiumoxid-Hydrat mit Ausnahme von β-Aluminiumoxid-Monohydrat, gewünschtenfalls unter Wasserzusatz, miteinander vermischt, in die gewünschte Form bringt und kalziniert, wobei man
aI) zur Herstellung eines aus Aluminiumoxid der Modifikationen "gamma" und "kappa" bestehenden Katalysator-Trägers, in welchem die Modifikation "delta" maximal bis zu 10 Gew.-% enthalten ist, bei Temperaturen zwischen 700 °C und 1020 °C, vorzugsweise 780 °C und 860 °C kalziniert,
aII) zur Herstellung eines aus Aluminiumoxid der Modifikationen "theta" und "kappa" bestehenden Katalysator-Trägers, in welchem die Modifikation "alpha" maximal bis zu 10 Gew.-% enthalten ist, bei Temperaturen zwischen 1020 und 1070 °C kalziniert.

Als Aluminiumoxid-Hydrat kann man vorzugsweise alpha-Aluminium-Monohydrat einsetzen. Man kann auch andere Hydrate wie das alpha-Trihydrat oder beta-Trihydrat einsetzen. Solche Aluminiumoxid-Modifikationen, die sich sofort in die alpha-Modifikation umwandeln wie das beta-Aluminiumoxidmonohydrat, werden nicht verwendet.

Zur Herstellung eines aus den Modifikationen "gamma" und "kappa" bestehenden Trägers reicht eine verhältnismäßig kurze Kalzinationsdauer aus. So kann man beispielsweise 1,5 bis 2,5 Stunden lang kalzinieren.

Zur Herstellung eines aus den Modifikationen "theta" und "kappa" bestehenden Trägers kalziniert man zweckmäßig über einen längeren Zeitraum, z.B. etwa 3,5 bis 6 Stunden lang.

Es gilt, daß das Maximum der Porendurchmesser und der durchschnittliche Porendurchmesser zu höheren Werten verschoben werden, je häher die Kalzinierungstemperatur ist und je länger die Kalzinierung andauert. Die Oberfläche sinkt, je höher die Kalzinierungstemperatur und je länger die Kalzinierung andauert.

Das als Ausgangsmaterial verwendete amorphe Aluminiumoxid liegt zweckmäßig in feinverteilter Form vor, z.B. in Form von Partikeln mit einem Durchmesser unterhalb von 1 Mikrometer.

Sein Wassergehalt liegt zwischen 3 und 8 Gew.-%. Als besonders gut verwendbar hat sich amorphes Aluminiumoxid mit der Bezeichnung HLS^{R} der Firma Martinswerk GmbH, Bergheim, herausgestellt. Dies ist ein rehydratisierbares amorphes Aluminiumoxid mit einem Aluminiumoxidgehalt von 96 %. Der Gehalt an Natriumoxid liegt zwischen 0,2 und 0,35 %, der Wassergehalt bei ca. 4 %. Es ist sehr feinteilig, 99 % der Partikel weisen einen Durchmesser von kleiner als 1 Mikrometer auf. Die spezifische Oberfläche beträgt etwa 200 m²/g.

Das andere Aluminiumoxid-Ausgangsmaterial, vorzugsweise alpha-Aluminiumoxid-Monohydrat (Bömit, Pseudobömit) liegt zweckmäßig in Form von Partikeln mit einem Durchmesser unterhalb von 100 Mikrometern. Als besonders gut geeignet erwiesen sich die Handelsprodukte PURAL NF^{R} und PURAL SB^{R} der Firma Condea Chemie, Brunsbüttel sowie das Handelsprodukt CATAPAL B^{R} der Firma Vista Chemical Company. PURAL NF^{R} ist ein Böhmit (alpha-Aluminiumoxid-Monohydrat) mit 70 % Aluminiumoxid, maximal 0,005 % Natriumoxid. Die spezifische Oberfläche nach dreistündiger Aktivierung bei 550 °C beträgt mindestens 160 m²/g. Mindestens 99 % der Partikel weisen einen Durchmesser von kleiner als 100 Mikrometer auf. Das Handelsprodukt PURAL SB^{R} besteht typischerweise zu 75 % aus Aluminiumoxid, und der Natriumoxid-Gehalt beträgt typischerweise maximal 0,002 %. PURAL SB^{R} ist ebenfalls ein Böhmit, seine Oberfläche nach dreistündiger Aktivierung bei 550 °C beträgt typischerweise 250 m²/g. Mindestens 90 % der Partikel weisen eine Partikelgröße von kleiner 90 Mikrometer auf. Das Handelsprodukt CATAPAL B^{R} besteht aus kleinen Böhmit-Kristalliten, die oft auch als Pseudoböhmit bezeichnet werden. Es besteht typischerweise zu 70,7 % aus Aluminiumoxid, der Natriumoxid-Gehalt beträgt typischerweise maximal 0,004 %. 85 % der Partikel weisen einen Durchmesser unterhalb von 90 Mikrometer auf. Die spezifische Oberfläche nach einstündiger Aktivierung bei 500 °C beträgt typischerweise 273 m²/g. CATAPAL B^{R} ist besonders gut geeignet zur Herstellung von Katalysator-Trägern mit bimodaler Porenstruktur.

Das Mischungsverhältnis von amorphem Al₂O₃ zu Al₂O₃-Hydrat beträgt vorzugsweise 33,69:20,50 bis 44,21:7,17.

Gemäß einer bevorzugten Variante des erfindungsgemäßen Katalysator-Trägers liegen die Modifikationen "gamma" und "kappa" im Gewichtsverhältnis 34:66 bis 33:77 vor. Zur Herstellung eines solchen Trägers vermischt man amorphes Aluminiumoxid und Aluminiumoxid-Hydrat im Gewichtsverhältnis von 27,90:15,17 bis 42,11:9,83. Man kalziniert wie angegeben zwischen 700 °C bis 1020 °C, vorzugsweise 780 °C bis 860 °C.

Gemäß einer anderen bevorzugten Variante des Trägers liegen die Modifikationen "theta" und "kappa" im Gewichtsverhältnis 30:70 bis 10:90, insbesondere 25:75 bis 15:85 vor. Zur Herstellung eines solchen Trägers vermischt man amorphes Aluminiumoxid und Aluminiumoxid-Hydrat im Gewichtsverhältnis von 37,90:15,17 bis 42,11:9,83. Man kalziniert zwischen 1020 °C und 1070 °C

Ein besonders bevorzugter erfindungsgemäßer Katalysator-Träger ist, wie oben schon ausgeführt, völlig frei von Aluminiumoxid der Modifikationen "gamma" und "delta", weist bei monomodaler Porenverteilung im Bereich von 700 bis 1500 Å bzw. bei bimodaler Porenverteilung 2 Maxima im Bereich von 100 bis 1500 Å auf, der mittlere Porendurchmesser liegt zwischen 300 und 500 Å und die Oberfläche zwischen 41 und 50 m²/g. Zu seiner Herstellung wird amorphes Aluminiumoxid und alpha-Aluminiumoxid-Hydrat miteinander vermischt und 4,5 bis 6,5 Stunden einer Temperatur von 1045 bis 1055 °C kalziniert.

Was die Form des Katalysator-Trägers angeht, so kann man das Ausgangsmaterial in jede Form bringen, in die man keramisches Trägermaterial üblicherweise bringt. So kann man es zu einem monolithischen Träger formen. Man kann es auch in Schüttgut-Formen bringen, beispielsweise in Zylinder-, Strangpressling-, Würfel-, Halbkugel-, Hohlkugelform und andere. Bevorzugt bringt man es in Kugelform. Dies geschieht zweckmäßig nach der Methode der "Aufbaugranulation". Diese Methode wird in der Ver-öffentlichung von W. Peach in "Aufbereitungs-Technik" 4 (1966), Seiten 177 bis 191 sowie in der EP-A-0 176 476 (US-A 4 637 908) beschrieben.

Man erzeugt zunächst eine Mischung aus amorphen Aluminiumoxid und vorzugsweise alpha-Aluminiumoxid-Monohydrat und unterwirft die Mischung unter Wasserzusatz auf einem Drehteller einer Aufbaugranulation. Es ist vorteilhaft, Unterkorn und zerkleinertes Überkorn aus einer früheren Aufbaugranulation als Keimbildner zuzusetzen. Das durch Aufbaugranulation erzeugte kugelförmige Aluminiumoxid wird dann zweckmäßig durch Stehenlassen gealtert und die gewünschte Fraktion abgesiebt. Das Unterkorn und, nach entsprechendem Zerkleinern, auch das Überkorn können wie gesagt als Keimbildner in die Granulation rückgeführt werden. Das durch Aufbaugranulation gewonnene Gut wird dann getrocknet und wie oben beschrieben kalziniert und in das erfindungsgemäße Katalysator-Trägermaterial überführt.

Die für die Einstellung der gewünschten Eigenschaften wichtigen Parameter Kalzinationszeit und Kalzinationstemperatur können in Abhängigkeit vom jeweils verwendeten Ausgangsmaterial geringfügig schwanken. Gewünschtenfalls kann man die idealen Verfahrensparameter durch einige Vorversuche ermitteln. Ist beispielsweise der Anteil an "delta"-Modifikation unerwünscht groß, so senkt man die Kalzinierungstemperatur, um den Anteil an "gamma"- bzw. "kappa"-Modifikation zu erhöhen, oder man erhöht die Temperatur und vergrößert den Anteil an "theta"- und "kappa"-Modifikation. Ist der Anteil an "alpha"-Modifikation zu groß, so senkt man die Kalzinierungstemperatur. Um das bzw. die Porenmaxima bzw. den mittleren Porendurchmesser zu höheren Werten zu verschieben, kann man die Kalzinationstemperatur erhöhen bzw. die Kalzinationsdauer verlängern. Im entgegengesetzten Fall verringert man die Kalzinationstemperatur bzw. verkürzt die Kalzinationsdauer. Den jeweiligen Anteil der Modifikationen kann man röntgenspektroskopisch bestimmen, die spezifische Oberfläche, das Porenvolumen und die Porenverteilung bestimmt man durch Quecksilber-Porosimetrie. Die Maxima der Porendurchmesser und der mittlere Porendurchmesser lassen sich daraus ermitteln.

Gewünschtenfalls kann man das Aluminiumoxid vor dem Kalzinieren vortempern, z.B. bis zu mehreren Stunden lang. So kann man 2 bis 6 Stunden lang bei Temperaturen zwischen 550 und 650 °C vortempern.

Ein Vorteil des Aufbaugranulations-Verfahrens ist, daß man das Aluminiumoxid zu Partikeln mit sehr variablem Durchmesser rollen kann. So kann der Durchmesser im Prinzip von weniger als z.B. 0,1 bis mehr als z.B. 10 mm betragen. Bevorzugt rollt man zu kugelförmigen Partikeln mit einem Durchmesser von 0,1 bis 1,0 mm, insbesondere 0,3 bis 0,8 mm. Das Kornspektrum weist bei der Methode eine sehr geringe Streubreite auf, die größten und die kleinsten Partikel variieren im Durchmesser um nicht mehr als 0,2 mm. Natürlich kann man die Partikel im Laufe des Herstellverfahrens noch in spezielle Fraktionen aufteilen, z.B. durch Sieben.

Ein weiterer Gegenstand der Erfindung sind Trägerkatalysatoren, die durch Aufbringen eines oder mehrerer katalytisch aktiver Metalle und/oder Metallverbindungen auf dem erfindungsgemäßen Träger erhältlich sind. Bevorzugt sind kugelförmige Trägerkatalysatoren mit einem Durchmesser von 0,1 bis 1,0 mm, vorzugsweise 0,3 bis 0,8 mm. Natürlich kann man, siehe oben, auch Träger mit größerem oder kleinerem Durchmesser verwenden.

Die erfindungsgemäßen Trägerkatalysatoren können im Prinzip beliebige katalytisch aktive Metalle bzw. Metallverbindungen enthalten, wie sie für verschiedenste Zwecke in Form von Trägerkatalysatoren eingesetzt werden. Beispielsweise können sie Edelmetalle wie Gold oder Silber, Platingruppenmetalle wie Platin, Rhodium oder Palladium oder Übergangsmetalle wie Kupfer enthalten. Der Gehalt an solchen Metallen liegt zweckmäßig im Bereich von 0,1 bis 5 Gew.-%, bezogen auf den fertigen Trägerkatalysator. Er kann gegebenfalls aber auch größer oder kleiner sein. Weiterhin können auch Metallverbindungen, z.B. Oxide von Metallen, insbesondere Oxide von Übergangsmetallen, z.B. Oxide von Mangan, Eisen, Nickel oder Kobalt, enthalten ein. Ihre Menge liegt ebenfalls zweckmäßig im Bereich von 0,1 bis 5 Gew.-%. Der Gehalt kann aber auch größer sein, bis hin zu 10 Gew.-% und mehr.

Natürlich können auch Gemische von Metallen, Gemische von Metallverbindungen oder Gemische von einem oder mehrere Metallen und einem oder mehreren Metallverbindungen auf dem Träger aufgebracht sein.

Erfindungsgemäße Trägerkatalysatoren, die Platingruppenmetalle, z.B. Platin oder Palladium und gewünschtenfalls noch Kupfer aufweisen, eignen sich beispielsweise für die Entfernung von Sauerstoff in Wasser. Sauerstoffarmes oder sauerstofffreies Wasser wird beispielsweise zur Herstellung von alkoholischen oder nichtalkoholischen Getränken verwendet. Sauerstoffarmes Wasser weist weiterhin den Vorteil der geringeren Korosivität auf und wird deshalb z.B. als Kühlwasser verwendet. zur Reduktion des Sauerstoffs wird das Sauerstoff enthaltende Wasser mit elementarem Wasserstoffgas, vorzugsweise bei Normaldruck oder Überdruck, und dann durch einen erfindungsgemäßen Trägerkatalysator geleitet, der Platin, Rhodium oder Palladium und gewünschtenfalls Kupfer auf einem erfindungsgemäßen Träger enthält. Besonders geeignet sind kugelförmige Trägerkatalysatoren, da mit ihnen die Sauerstoffeliminierung in der Wirbelschicht besonders gut betrieben werden kann.

Ein anderer erfindungsgemäßer Trägerkatalysator, vorzugsweise in Kugelform, eignet sich zur Entfernung oder Verminderung des Nitrit- und/oder Nitratgehaltes von nitrit- und/oder nitratbelastetem Wasser unter selektiver Stickstoffbildung. Dieser Trägerkatalysator umfaßt einen mit einer aus Palladium und/oder Rhodium oder aus Palladium und einem Metall der Kupfergruppe bestehenden Metallkomponente imprägnierten porösem Träger. Der Träger besteht aus der "theta"- und "kappa"-Modifikation, wobei die "alpha"-Modifikation allenfalls als in geringen Mengen vorliegende Verunreinigung enthalten ist. Der Träger ist völlig frei von der Modifikation "gamma" und "delta". Der Träger weist weiterhin ein Porendurchmessermaximum im Bereich von 700 bis 1500 Å oder 2 Porendurchmessermaxima im Bereich von 100 bis 1500 Å auf, der mittlere Porendurchmesser beträgt 300 bis 500 Å und die Oberfläche liegt zwischen 41 und 50 m²/g. Ein solcher Katalysator, dessen Metallkomponente aus Palladium und/oder Rhodium besteht, eignet sich zur Behandlung von nur nitritbelastetem Wasser. Ein Katalysator, dessen Metallkomponente aus Palladium und einem Metall der Kupfergruppe oder aus Rhodium und gegebenenfalls Palladium besteht, eignet sich zur Behandlung von Wasser, das auch Nitrat enthält. Als Metall der Kupfergruppe verwendet man vorzugsweise Kupfer, der Anteil der Metallkomponente am Gesamtkatalysator liegt zwischen 0,1 und 10 Gew.-%. Sofern Kupfer enthalten ist, liegt das Gewichtsverhältnis von Palladium zu Kupfer zwischen 2:1 und 8:1. Die Anwendung eines solchen speziellen Trägerkatalysators zur Entfernung oder Verminderung des Nitrit- und/oder Nitratgehaltes von nitrit- und/oder nitratbelastetem Wasser unter selektiver Stickstoff-Bildung kann analog dem in der EP-A-0 359 074 (US-A 4 990 266) beschriebenen Verfahren erfolgen. Bei jenem Verfahren wird Wasserstoffgas in das Wasser eingeleitet beispielsweise über Gassättiger oder die bekannte Permeationsbegasung. Man kann bei Normaldruck oder geringem Überdruck, z.B. bis zu 10 Atmosphären arbeiten. Der pH-Wert des zu behandelnden Wassers kann auf einen Bereich von etwa 2 bis 8 einreguliert werden. Bevorzugt betreibt man dieses Verfahren als Wirbelschichtverfahren.

Palladium aufweisende Katalysatoren eignen sich z.B. zur Ozonzersetzung, Katalysatoren mit einer Kombination von Gold und Eisenoxid, Nickeloxid oder Kobaltoxid zur Oxidation von Kohlenmonoxid.

Träger und Trägerkatalysatoren sind so stabil, daß sie auch unter extremen Bedingungen, z.B. bei Temperaturen von bis zu 120 °C und mehr und Drücken von bis zu 40 Bar und mehr eingesetzt werden können.

Die Herstellung der erfindungsgemäßen Trägerkatalysatoren kann in an sich bekannter Weise erfolgen. Beispielsweise kann man Metallsalze oder komplexe Metallverbindungen im Tränkverfahren, Sprühverfahren oder Fällungsverfahren auf das Trägermaterial aufbringen und nach Trocknung und anschließender Kalzinierung gewünschtenfalls reduzieren. Das Trägermaterial kann beispielsweise mit einer Lösung oder Suspension von Metallsalzen oder komplexen Metallverbindungen in Wasser oder einem organischen Lösungsmittel, beispielsweise einem niederen Alkohol wie Äthanol, oder Keton, oder deren Gemischen getränkt oder besprüht und getrocknet werden. Nach dem Trocknen können sie gewünschtenfalls auch bei Temperaturen bis zu 600 °C, beispielsweise zwischen 300 und 600 °C, kalziniert werden. Gewünschtenfalls kann sich noch eine Reduktion mit einem metallfreien Reduktionsmittel, vorzugsweise Wasserstoff oder gegebenenfalls auch einem anderen Reduktionsmittel wie Hydrazin, Formaldehyd, Kohlenmonoxid oder Methan unter thermischer Behandlung bei Temperaturen im Bereich bis zu 550 °C, beispielsweise zwischen ca. 100 und 550 °C, anschließen.

Zur Herstellung von Trägerkatalysatoren mit oxidischen Metallverbindungen kann man in Luft oder Sauerstoffatmosphäre bei Temperaturen bis zu 600 °C kalzinieren. Zweckmäßig geht man von Metallnitraten, Metallchloriden oder Metallhydroxiden aus.

Ein besonderes Charakteristikum der erfindungsgemäßen Katalysator-Träger, insbesondere der kugelförmigen Katalysator-Träger, ist ihre hohe Abriebfestigkeit. Dementsprechend weisen die unter Verwendung der erfindungsgemäßen Katalysator-Träger hergestellten Trägerkatalysatoren ebenfalls eine vorteilhaft hohe Abriebfestigkeit auf. Sie sind deshalb sehr gut in Verfahren einsetzbar, die in der Wirbelschicht betrieben werden.

Die folgenden Beispiele sollen die Erfindung weiter erläutern, ohne sie in ihrem Umfang einzuschränken.

### Beispiele

### Allgemeines:

Die Katalysator-Träger, deren Herstellung in den folgenden Beispielen beschrieben wird, wurden einem Test unterworfen, welchem die relative Abriebfestigkeit verschiedener Träger miteinander verglichen werden konnte. Diese Bestimmung der relativen Abriebfestigkeit wurde folgendermaßen durchgeführt: Jeweils 1.0 g des zu untersuchenden Materials wurden in ein 10 ml-Schnappdeckelglas (45 x 22 mm) eingewogen und zweimal mit 5 ml vollentsalztem Wasser (VE-Wasser) gespült, um etwaig anhaftenden Staub zu entfernen. Das oberflächlich anhaftende Wasser wurde dabei mit einer Kapillare abgesaugt, so daß lediglich das in den Poren befindliche Wasser im Material verblieb. Es wruden dann erneut 5 ml VE-Wasser zugegeben und das verschlossene Glas 1 Minute auf einem Reagenzglasschüttler (Firma Heidolf, Reax 1R) bei 2400 Umdrehungen pro Minute geschüttelt. 2 ml der überstehenden Lösung wurden dann sofort in eine 10 mm-Küvette überführt und der Extinktionswert E mehrfach nach wiederholtem Aufschütteln bei λ = 500 µm gemessen (Spektralphotometer CADAS 100, Firma Dr. Lange). Bei E-Werten, die größer als 1 sind, muß die Probe entsprechend verdünnt werden, wobei die Linearität der Meßwerte gegeben ist.

Mechanisch stabile und damit abriebfeste Träger bzw. Katalysatoren zeigen unter diesen Versuchsbedingungen E-Werte im Bereich von 0.1 bis 0.7.

### Beispiel 1:

### Herstellung von Aluminiumoxid-Trägern mit monomodaler Porenverteilung, Maximum des Porendurchmessers bei 850 Å

Angewendet wurde die Methode der Aufbaugranulation. 140 kg Keimbildner (Unterkorn aus einer früheren Aufbaugranulation mit 70 Gew.-% Aluminiumoxid und 30 Gew.-% Wasser, Partikelgröße kleiner 0,5 mm) wurden mit 3 l Wasser besprüht.

Anschließend wurden 105 kg einer Aluminiumoxidmischung hergestellt, indem amorphe, hochdisperse Tonerde (Handelsprodukt HLS^{R} der Firma Martinswerk, Bergheim) und Aluminiumoxid vom Böhmit-Typ (Handelprodukt Condea Pural SB^{R} der Firma Condea, Brunsbüttel) im Gewichtsverhältnis von 40:12,5 miteinander vermischt wurden. Dieses Aluminiumoxidgemisch wurde zusammen mit den 140 kg Keimbildner in einen Drehteller gegeben. Der rotierenden Masse wurden im Verlauf von 4 Stunden etwa 32,6 kg Wasser zugesprüht.

Dann wurden noch einmal 132 kg der vorstehend beschriebenen Aluminiumoxidmischung mit dem angegebenen Gewichtsverhältnis von amorphen Aluminiumoxid und Aluminiumoxid vom Böhmit-Typ der im Drehteller befindlichen Masse zugefügt. Im Verlauf von 2,5 Stunden wurden dann weitere 42 kg Wasser der rotierenden Masse zugesprüht. Dann wurde die Masse noch 20 Minuten nachgerollt und 16 Stunden lang im ruhenden Drehteller gealtert.

Unter Zudosieren von 3 kg Wasser wurde die gealterte Masse noch einmal 15 Minuten lang im Drehteller gerollt und anschließend abgesiebt. Unterkorn (Partikeldurchmesser kleiner 0,5 mm) und Überkorn (Partikeldurchmesser größer 0,68 mm) nach Zerkleinern wurden als Keimbildner in eine spätere Aufbaugranulation rückgeführt.

Die Faktion mit einer Partikelgröße von 0,5 bis 0,68 mm wurde dann 16 Stunden lang bei 150 °C getrocknet.

### Ausbeute:

188 kg Trockengut der Zusammenstzung 85 Gew.-% Aluminiumoxid, Restwasser.

Dem vorgetrockneten Gut wurden dann 10 kg Material entnommen, welches zunächst 4 Stunden lang bei 600 °C vorgetrocknet und dann 5 Stunden lang bei 1050 °C kalziniert wurde.

### Ausbeute:

8,5 kg kugelförmiges Aluminiumoxid, bestehend aus den Modifikationen "theta" und "kappa" mit Spuren der Modifikation "alpha". Das Material war frei von den Modifikationen "gamma" und "delta".
Maximum des Porendurchmessers:
850 Å. Die Durchmesser der Poren verteilen sich auf einen Bereich zwischen etwa 60 Å und 1800 Å.
Relative Abriebzahl: 0,63
Spezifische Oberfläche, gemessen nach der Quecksilber-Porosimetrie-Methode: 45 m²/g,
Porenvolumen: 0,40 ml/g
Mittlerer Porendurchmesser: 356 Å.

### Beispiel 2:

### Herstellung eines monomodalen Trägers mit einem Maximum des Porendurchmessers bei 500 Å.

10 kg des gemäß Beispiel 1 hergestellten Ausgangsmaterials wurden zunächst 6 Stunden lang bei 600 °C vorgetrocknet und dann 4 Stunden lang bei 1030 °C kalziniert.

### Ausbeute:

8,5 kg kugelförmiges Aluminiumoxid. Es bestand aus den Modifikationen "theta" und "kappa", die Modifikationen "delta" und "alpha" waren in Spuren nachweisbar.
Maximum des Porendurchmessers:
500 Å. Die Durchmesser der Poren verteilen sich auf einen Bereich zwischen 70 und 1200 Å.
Relative Abriebzahl: 0,40
Spezifische Oberfläche: 63 m²/g,
Porenvolumen: 0,42 ml/g
Mittlerer Porendurchmesser: 267

### Beispiel 3:

### Herstellung eines monomodalen Trägers mit einem Maximum des Porendurchmessers bei 950 Å.

10 kg des gemäß Beispiel 1 hergestellten Ausgangsmateials wurden zunächst 4 Stunden lang bei 600 °C vorgetrocknet und dann 6 Stunden lang bei 1050 °C kalziniert.

### Ausbeute:

8,5 kg kugelförmiges Aluminiumoxid. Es bestand aus den Modifikationen "theta" und "kappa", die Modifikation "alpha" war nur in Spuren nachweisbar.
Maximum des Porendurchmessers:
950 Å. Die Durchmesser der Poren verteilen sich auf einen Bereich zwischen 80 und 1800 Å.
Relative Abriebzahl: 0,64
Spezifische Oberfläche: 35 m²/g,
Porenvolumen: 0,39 ml/g.
Mittlerer Porendurchmesser: 446 Å.

### Beispiel 4:

### Herstellung eines monomodalen Trägers mit einem Maximum des Porendurchmessers bei 850 Å.

Beispiel 1 wurde wiederholt. Anstelle des Aluminiumoxids der Marke Pural SB^{R} wurde als Aluminiumoxid das Handelsprodukt Pural NF^{R} (ebenfalls ein Böhmit) der Firma Condea-Chemie eingesetzt.

10 kg des analog Beispiel 1 hergestellten Trockengutes wurden als Ausgangsmaterial eingesetzt. Das Material wurde wieder zunächst 4 Stunden lang bei 600 °C vorgetrocknet, und dann 5 Stunden lang bei 1050 °C kalziniert.

### Ausbeute:

8,5 kg kugelförmiges Aluminiumoxid. Es bestand aus den Modifikationen "theta" und "kappa", die Modifikation "alpha" war nur in Spuren nachweisbar.

### Maximum des Porendurchmessers:

850 Å. Die Durchmesser der Poren verteilen sich auf einen Bereich zwischen 80 und 1400 Å.
Relative Abriebzahl: 0,44
Spezifische Oberfläche: 46 m²/g,
Porenvolumen: 0,39 ml/g.
Mittlerer Porendurchmesser: 339 Å.

### Beispiel 5:

### Herstellung eines monomodalen Trägers mit einem Maximum des Porendurchmessers bei 1000 Å.

10 kg des in Beispiel 4 hergestellten Ausgangsmaterials wurden zunächst 4 Stunden lang bei 600 °C vorgetrocknet und dann 6 Stunden lang bei 1050 °C kalziniert.

### Ausbeute:

8,5 kg kugelförmiges Aluminiumoxid. Es bestand aus den Modifikationen "theta" und "kappa", die Modifikation "alpha" war nur in Spuren nachweisbar.

### Maximum des Porendurchmessers:

1000 Å. Der Durchmesser der Poren verteilt sich auf einen Bereich zwischen 100 und 1800 Å.
Relative Abriebzahl: 0,69
Spezifische Oberfläche: 33 m²/g,
Porenvolumen: 0,42 ml/g.
Mittlerer Porendurchmesser: 509 Å.

### Beispiel 6:

### Herstellung eines bimodalen Trägers mit Maxima des Porendurchmessers bei 115 und 1400 Å.

Zunächst wurde analog Beispiel 1 Ausgangsmaterial hergestellt. Anstelle des Aluminiumoxids PURAL SB^{R} wurde CATAPAL B^{R} der Firma Vista Chemical Company verwendet.

10 kg des analog Beispiel 1 hergestellten Trockengutes als Ausgangsmaterial wurden zunächst 4 Stunden lang bei 600 °C vorgetrocknet und dann 5 Stunden lang bei 1050 °C kalziniert.

### Ausbeute:

8,5 kg kugelförmiges Aluminiumoxid. Es bestand aus den Modifikationen "theta" und "kappa", die Modifikation "alpha" war nur in Spuren nachweisbar.
Maxima der Porendurchmesser:
150 Å und 1400 Å. Die Durchmesser der Poren verteilen sich auf einen Bereich zwischen 80 und 4000 Å.
Relative Abriebzahl: 0,50
Spezifische Oberfläche: 41 m²/g, Porenvolumen: 0,46 ml/g.
Mittlerer Porendurchmesser: 449 Å.

### Beispiel 7: (Vergleichsbeispiel)

10 kg des gemaß Beispiel 1 hergestellten Ausgangsmaterials wurden zunächst 4 Stunden lang bei 600 °C vorgetrocknet und dann 2 Stunden lang bei 900 °C kalziniert.

### Ausbeute:

8,5 kg kugelförmiges Aluminiumoxid. Es bestand aus den Modifikationen "delta" und "kappa", die Modifikation "gamma" war in geringen Anteilen nachweisbar.
Maximum des Porendurchmessers: 220 Å
Relative Abriebzahl: 1,03

### Beispiel 8: (Vergleichsbeispiel)

10 kg des in Beispiel 1 hergestellten Ausgangsmaterials wurden zunächst 4 Stunden lang bei 600 °C vorgetrocknet und dann 4 Stunden lang bei 1100 °C kalziniert.

### Ausbeute:

8,5 kg kugelförmiges Aluminiumoxid. Es bestand aus der Modifikation "alpha", die Modifikationen "theta" und "kappa" waren in geringen Anteilen nachweisbar.
Maxima der Porendurchmesser: 1260 Å und 110000 Å.
Relative Abriebzahl: 1,9
Aus den Beispielen 1 bis 8 läßt sich entnehmen, daß die relative Abriebzahl als Maß für die Abriebfestigkeit dann befriedigende Werte aufweist (d.h. unterhalb 0,7 liegt), wenn man beim Kalzinieren darauf achtet, daß die "delta"-Modifikation bzw. "alpha"-Modifikation allenfalls in unerwünschten, geringfügigen Anteilen im Träger entsteht.

### Beispiel 9:

### Herstellung von Trägerkatalysatoren.

Verwendet wurde das gemäß Beispiel 1 hergestellte Trägermaterial. Es wurde eine als besonders günstig ermittelte Fraktion mit einem Korngrößenbereich von 400 bis 680 Mikrometer, die einen Ober- bzw. Unterkornanteil von jeweils kleiner 3 % aufwies, verwendet. Die Korngrößenverteilung innerhalb des Bereichs von 400 bis 680 Mikrometer folgte der Normalverteilung.

Die Herstellung der Katalysatoren erfolgte durch Aufbringen der katalytisch aktiven Metallverbindungen auf das Trägermaterial, wobei nach einer der nachfolgenden Methoden gearbeitet wurde.
a) In 219 ml einer wäßrigen Tetraammoniumpalladium(II)-Hydroxid-Lösung mit einem Palladiumgehalt von 2,74 g/l, d.h. einem Gesamtgehalt von 0,6 g Palladium, wurden in einem 250 ml-Rundkolben 30 g des gemäß Beispiel 1 hergestellten Trägermaterials der obenangegebenen Fraktion eingebracht. Die Lösung wurde über einen Zeitraum von 2 Stunden bei 60 °C und 30 mbar bis zur Trockne eingeengt, der erhaltene imprägnierte Träger bei 110 °C 1 Stunde lang getrocknet und der getrocknete Träger noch 0,5 Stunden bei 550°C kalziniert. Unter analogen Bedingungen erfolgte die Aufbringung von Kupfer. Zur Herstellung der Kupfersalzlösung wurden 0,47 g Kupfer(II)acetat-Monohydrat (entsprechend 0,15 g Kupfer) in 100 ml vollentsalztem Wasser gelöst. Der imprägnierte Träger wurde dann 2 Stunden lang bei 110 °C getrocknet. Zur Reduktion der Metalle wurde der imprägnierte und getrocknete Träger 8 Stunden bei 350 °C in einem von außen beheizten Quarzrohr einer Wasserstoffatmosphäre ausgesetzt.
   Der fertige Katalysator besaß laut Analyse einen Palladiumgehalt von 2,0 ± 0,05 Gew.-% und einen Kupfergehalt von 0,5 ± 0,02 Gew.-%. Die relative Abriebzahl entsprach der Abriebzahl des Trägermaterials.
b) In eine Lösung von 1,68 g Palladiumdichlorid, das entspricht 1,0 g Palladium, in 11,75 ml 1-molarer Salzsäure und 22,7 ml Aceton wurden in einem 250 ml-Rundkolben 50,42 g des gemäß Beispiel 1 hergestellten Trägermaterials der obenangegebenen Fraktion eingebracht. Die Lösung wurde 30 Minuten lang, angeschlossen an einen Rotationsverdampfer, gerührt. Die Lösungsmittel wurden über einen Zeitraum von 60 Minuten bei 60 °C und 50 mbar abgedampft. Der mit Palladium imprägnierte Träger wurde dann 1 Stunde lang bei 150 °C getrocknet und 0,5 Stunden bei 550 °C kalziniert. Zur Aufbringung des Kupfers wurde der mit Palladium imprägnierte Träger in eine Lösung von 0,79 g Kupfer(II)acetat-Monohydrat, das entspricht 0,25 g Kupfer, in 30 ml Wasser gegeben und wie vorstehend beschrieben im Rotationsverdampfer behandelt. Der mit Palladium und Kupfer imprägnierte Träger wurde dann 1 Stunde lang bei 100 °C getrocknet und schließlich, wie unter a) beschrieben, reduziert.
   Die Anlayse entsprach den nach der Methode a) erhaltenen Werten.
   In völlig analoger Weise vurden Trägerkatalysatoren hergestellt, die Palladium und Kupfer als aktive Metalle enthielten, wobei Trägermaterial eingesetzt wurde, das gemäß den Beispielen 2 bis 6 hergestellt worden war. Alle diese Katalysatoren eignen sich zur katalytischen Entfernung von Sauerstoff unter Begasung mit Wasserstoff aus Sauerstoff enthaltendem Wasser oder wäßrigen Zubereitungen, wie sie beispielsweise für die Getränkeherstellung verwendet werden.

### Bespiel 10:

Anwendung des Palladium und Kupfer enthaltenden Trägerkatalysators auf Basis des gemäß Beispiel 1 hergestellten Trägermaterials zur Entfernung von Sauerstoff und Nitrat aus Wasser in der Wirbelschicht.

### Verwendete Apparatur:

Eine Rohwasserleitung führte zunächst in einen Schwebstoffilter und dann in eine Drückerhöhungsvorrichtung. Aus der Druckerhöhungsvorrichtung führte eine Leitung in einen Begasungsreaktor. In diesem Begasungsrektor konnte über Silikonmembranen Wasserstoff in das Wasser eingetragen werden. Der Begasungsreaktor war mit einem Reaktor verbunden, welche der katalytische Sauerstoff und Nitratabbau durchgeführt wurde. In diesem Reaktor waren 22 kg des gemäß Beispiel 9 unter Verwendung von Trägermaterial des Beispiels 1 hergestellten, Palladium und Kupfer enthaltenden Trägerkatlysators enthalten waren. Eine aus dem Reaktor führende Auslaßleitung für das behandelte Wasser führte in einen Schwebstoffilter. Das den Schwebstoffilter verlassende Wasser konnte dann als Reinwasser dem jeweiligen Anwendungszweck zugeführt werden.

### Versuchsdurchführung:

Der Versuch wurde während einer Zeitdauer von über 9 Wochen in einem niedersächsischen Wasserwerk durchgeführt. Der Nitratgehalt des Rohwassers (Grundwasser) schwankte zwischen 40 mg und 60 mg pro Liter. Der Sauerstoffgehalt betrug 4,2 mg/l. Die Temperatur des Rohwassers betrug 11 °C.

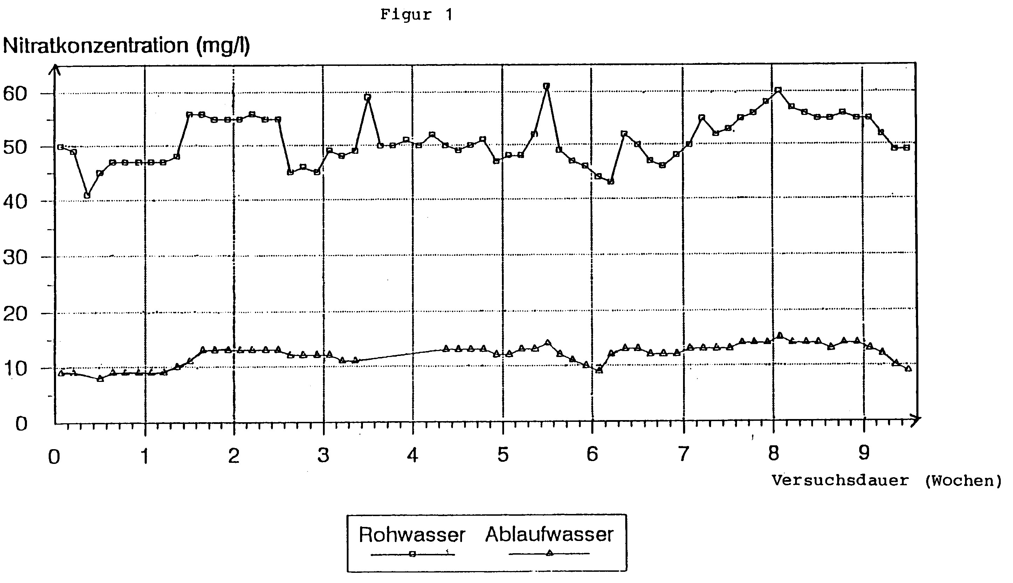

Das Rohwasser wurde zunächst durch den Schwebstoffilter geführt und dann in der Druckerhöhungsvorrichtung auf einen Wasserdruck von 5 bar gebracht. Im Begasungsreaktor wurde das Wasser mit Wasserstoff begast. Das mit Wasserstoff beladene Wasser wurde mit einer Durchflußmenge von 2000 Liter pro Stunde durch den Reaktor geleitet, in welchem das Trägerkatalysatormaterial in der Wirbelschicht gehalten wurde. Sowohl der Nitratgehalt des zu behandelnden nitratbelasteten Grundwassers als auch der Nitrat-Gehalt des behandelten Grundwassers wurden über den Zeitraum von mehr als 9 Wochen aufgezeichnet. Der Figur 1 können die Nitrat-Konzentrationen des unbehandelten bzw. des behandelten Grundwassers, die über eine Vielzahl von Messungen ermittelt wurden, entnommen werden. Die Nitrat-Abbauleistung konnte zu 3,5 g Nitrat pro Kilogramm Katalysator und Stunde ermittelt werden. Wie die Figur 1 beweist, ist der Katalysator über Monate hinweg standfest und liefert auch bei schwankenden Nitrat-Mengen konstant gute Ergebnisse.

Einige Analysendaten des unbehandelten und behandelten Grundwassers sind in der folgenden Tabelle zusammengestellt.

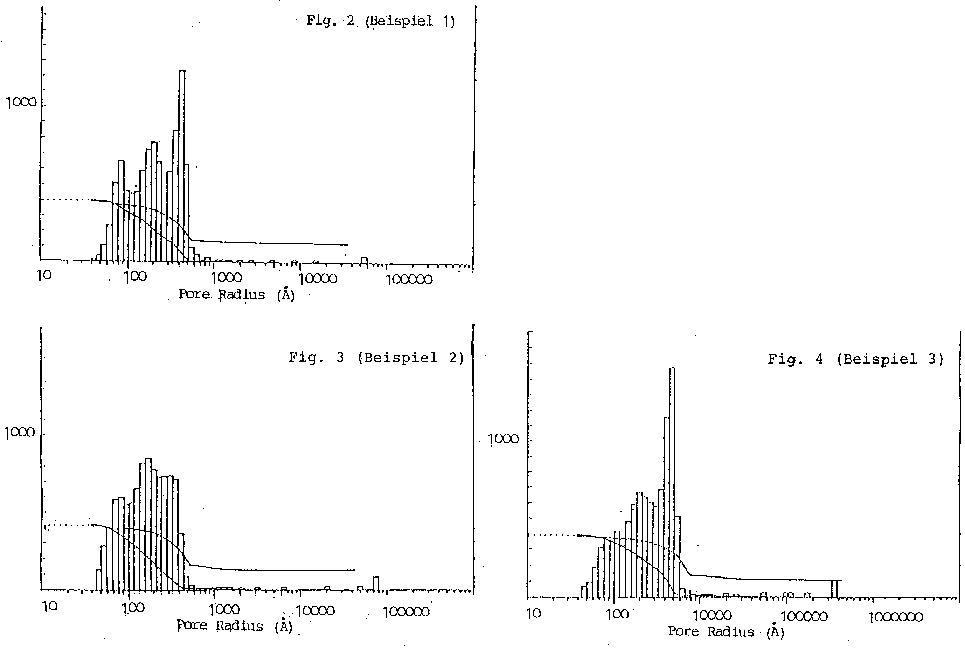

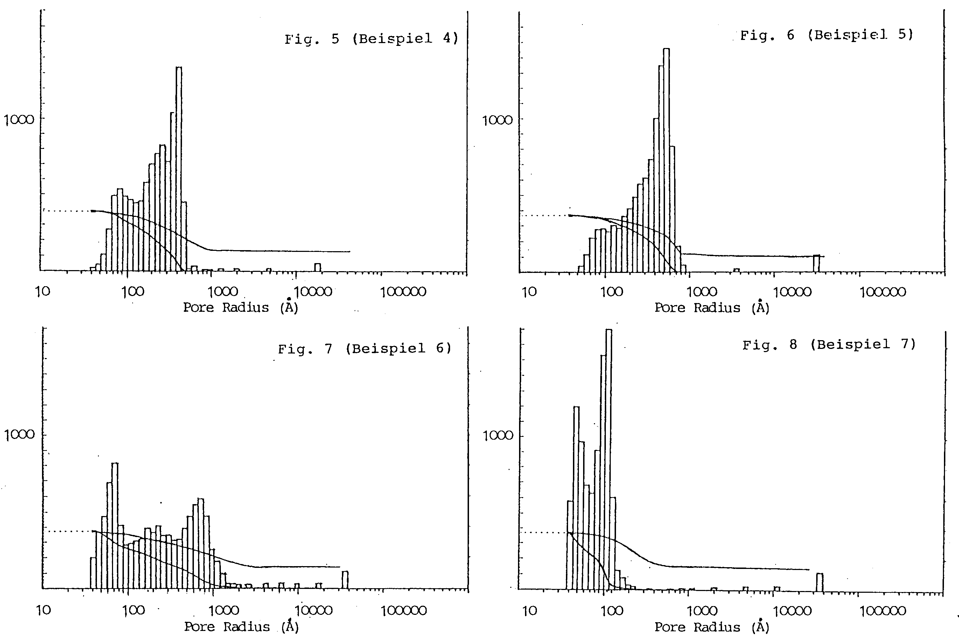

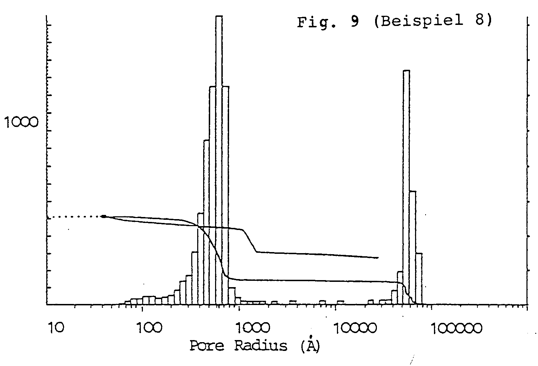

Die Figuren 2 bis 10 geben die Verteilung der Porendurchmesser im Trägermaterial der Beispiele 1 bis 8 wieder.

**Tabelle 1**

| Analysendaten des unbehandelten bzw. behandelten Grundwassers | | |
|---|---|---|
| Parameter | unbehandeltes Grundwasser | behandeltes Grundwasser |
| pH-Wert | 7,10 | 7,65 |
| O₂-Gehalt | 4,2 mg/l | < 20 Mikrogramm |
| Nitrat | 59 mg/l | 11 mg/l |
| Nitrat | < 0,1 mg/l | < 0,1 mg/l |
| Chlorid | 102 mg/l | 101 mg/l |
| Sulfat | 149 mg/l | 152 mg/l |
| Ammonium | < 0,05 mg/l | < 0,05 mg/l |
| Calcium | 172 mg/l | 175 mg/l |
| Eisen | < 0,05 mg/l | < 0,05 mg/l |
| Mangan | < 0,05 mg/l | < 0,05 mg/l |

## Patentansprüche

1. Katalysator-Träger, im wesentlichen bestehend aus aktiviertem Aluminiumoxid (Al₂O₃), gekennzeichnet durch folgende Eigenschaften:
aI) Er besteht aus Aluminiumoxid der Modifikationen "gamma" und "kappa", wobei die Modifikation "delta" maximal bis zu 10 Gew.-% enthalten ist oder,
aII) er besteht aus Aluminiumoxid der Modifikationen "theta" und "kappa", wobei die Modifikation "alpha" maximal bis zu 10 Gew.-% enthalten ist;
b) die Verteilung der Porendurchmesser weist ein Maximum (monomodale Porenverteilung) oder zwei Maxima (bimodale Porenverteilung) im Bereich zwischen 100 und 1500 Å auf;
c) die Oberfläche, berechnet nach der Quecksilber-Porosimetrie-Methode, liegt zwischen 33 und 63 m²/g.

2. Katalysator-Träger nach Anspruch 1, dadurch gekennzeichnet, daß die Modifikationen "gamma" und "kappa" im Gewichtsverhältnis 34:66 bis 33:77 vorliegen.

3. Katalysator-Träger nach Anspruch 1, dadurch gekennzeichnet, daß er aus Aluminiumoxid der Modifikationen "theta" und "kappa" besteht, wobei die Modifikation "alpha" maximal bis zu 10 Gew.-% vorliegt.

4. Katalysator-Träger nach Anspruch 3, dadurch gekennzeichnet, daß die Modifikationen "theta" und "kappa" im Gewichtsverhältnis 30:70 bis 10:90 vorliegen.

5. Katalysator-Träger nach einem der vorhergehenden Ansprüche, dadurch gekennzeichnet, daß er im wesentlichen kugelförmig ist.

6. Katalysator-Träger nach Anspruch 3, dadurch gekennzeichnet, daß er völlig frei ist von Aluminiumoxid der Modifikationen "gamma" und "delta", daß die Modifikation "alpha" maximal bis zu 10 Gew.-% enthalten ist, daß die Verteilung der Porendurchmesser ein Maximum (monomodale Porenverteilung) im Bereich von 700 bis 1500 Å oder 2 Maxima (bimodale Porenverteilung) im Bereich von 100 bis 1500 Å aufweist, daß der mittlere Porendurchmesser 300 bis 500 Å beträgt und die Oberfläche, berechnet nach der Quecksilber-Methode, zwischen 41 und 50 m²/g beträgt.

7. Verfahren zur Herstellung eines im wesentlichen aus Aluminiumoxid (Al₂O₃) bestehenden Katalysator-Trägers, dessen Verteilung der Porendurchmesser ein Maximum (monomodale Porenverteilung) oder 2 Maxima (bimodale Porenverteilung) im Bereich zwischen 100 und 1500 Å aufweist und dessen Oberfläche, berechnet nach der Quecksilber-Methode, zwischen 33 und 63 m²/g beträgt, wobei man amorphes Aluminiumoxid (Modifikation "chi") mit Aluminiumoxid-Hydrat mit Ausnahme von β-Aluminiumoxid-Monohydrat unter Wasserzusatz miteinander vermischt, in die gewünschte Form bringt und kalziniert, wobei man
aI) zur Herstellung eines aus Aluminiumoxid der Modifikationen "gamma" und "kappa" bestehenden Katalysator-Trägers, in welchem die Modifikation "delta" maximal bis zu 10 Gew.-% enthalten ist, bei Temperaturen zwischen 700 °C bis 1020 °C, vorzugsweise 780 °C und 860 °C kalziniert,
aII) zur Herstellung eines aus Aluminiumoxid der Modifikationen "theta" und "kappa" bestehenden Katalysator-Trägers, in welchem die Modifikation "alpha" maximal bis zu 10 Gew.-% enthalten ist, bei Temperaturen zwischen 1020 und 1070 °C kalziniert.

8. Verfahren nach Anspruch 7, dadurch gekennzeichnet, daß man den Katalysator-Trägern nach der Methode der Aufbau-Granulation zu im wesentlichen kugelförmigen Partikeln formt.

9. Verfahren nach Anspruch 8, dadurch gekennzeichnet, daß man Unterkorn oder zerkleinertes Überkorn aus einer vorhergehenden Katalysator-Träger-Herstellung als Keimbildner zusetzt.

10. Verfahren nach Anspruch 8 oder 9, dadurch gekennzeichnet, daß man das Aluminiumoxid zu kugelförmigen Partikeln eines Durchmessers von 0,1 bis 1,0 mm formt.

11. Verfahren nach einem der Ansprüche 7 bis 10, dadurch gekennzeichnet, daß zur Herstellung eines im wesentlichen aus Aluminiumoxid bestehenden Katalysator-Trägers, der völlig frei ist von Aluminiumoxid der Modifikationen "gamma" und "delta", der die Modifikation "alpha" maximal bis zu 10 Gew.-% enthält, dessen Verteilung der Porendurchmesser ein Maximum (monomodale Porenverteilung) im Bereich von 700 bis 1500 Å oder 2 Maxima (bimodale Porenverteilung) im Bereich von 100 bis 1500 Å aufweist, dessen mittlerer Porendurchmesser 300 bis 500 Å beträgt und dessen Oberfläche, berechnet nach der Quecksilber-Porosimetrie-Methode, zwischen 41 und 50 m²/g liegt, man 4,5 bis 6,5 Stunden lang bei einer Temperatur von 1045 bis 1055 °C kalziniert.

12. Trägerkatalysator, umfassend einen Katalysator-Träger der Ansprüche 1 bis 6 und ein oder mehrere katalytisch aktive Metalle und/oder Metallverbindungen.

13. Verwendung eines kugelförmigen Trägerkatalysators nach Anspruch 12 in Wirbelschichtverfahren.

## Claims

1. A catalyst support, substantially consisting of activated aluminium oxide (Al₂O₃), characterised by the following properties:
aI) it consists of aluminium oxide of the modifications "gamma" and "kappa", with the modification "delta" being contained up to a maximum of 10% by weight, or
aII) it consists of aluminium oxide of the modifications "theta" and "kappa", with the modification "alpha" being contained up to a maximum of 10% by weight;
b) the distribution of the pore diameters has a maximum (monomodal pore distribution) or two maxima (bimodal pore distribution) in the range between 100 and 1500 Å;
c) the surface area, calculated according to the mercury porosimetry method, is between 33 and 63 m²/g.

2. A catalyst support according to Claim 1, characterised in that the modifications "gamma" and "kappa" are present in a weight ratio of 34:66 to 33:77.

3. A catalyst support according to Claim 1, characterised in that it consists of aluminium oxide of the modifications "theta" and "kappa", with the modification "alpha" being present up to a maximum of 10% by weight.

4. A catalyst support according to Claim 3, characterised in that the modifications "theta" and "kappa" are present in a weight ratio of 30:70 to 10:90.

5. A catalyst support according to one of the preceding claims, characterised in that it is substantially spherical.

6. A catalyst support according to Claim 3, characterised in that it is completely free of aluminium oxide of the modifications "gamma" and "delta", that the modification "alpha" is contained up to a maximum of 10% by weight, that the distribution of the pore diameters has a maximum (monomodal pore distribution) in the range of 700 to 1500 Å or 2 maxima (bimodal pore distribution) in the range of 100 to 1500 Å, that the average pore diameter is 300 to 500 Å and the surface area, calculated according to the mercury method, is between 41 and 50 m²/g.

7. A method for producing a catalyst support, substantially consisting of aluminium oxide (Al₂O₃), the distribution of the pore diameters of which has a maximum (monomodal pore distribution) or 2 maxima (bimodal pore distribution) in the range between 100 and 1500 Å and the surface area of which, calculated according to the mercury method, is between 33 and 63 m²/g, wherein amorphous aluminium oxide (modification "chi") is mixed with aluminium oxide hydrate with the exception of β-aluminium oxide monohydrate with the addition of water, is brought into the desired form and is calcined, wherein
aI) for the production of a catalyst support consisting of aluminium oxide of the modifications "gamma" and "kappa", in which the modification "delta" is contained up to a maximum of 10% by weight, calcination is effected at temperatures of between 700°C and 1020°C, preferably 780°C and 860°C,
aII) for the production of a catalyst support consisting of aluminium oxide of the modifications "theta" and "kappa", in which the modification "alpha" is contained up to a maximum of 10% by weight, calcination is effected at temperatures of between 1020°C and 1070°C.

8. A method according to Claim 7, characterised in that the catalyst supports are formed into substantially spherical particles according to the pelletising method.

9. A method according to Claim 8, characterised in that undersize or ground oversize from a preceding catalyst support production process is added as nucleating agent.

10. A method according to Claim 8 or 9, characterised in that the aluminium oxide is shaped into spherical particles of a diameter of 0.1 to 1.0 mm.

11. A method according to one of Claims 7 to 10, characterised in that for the production of a catalyst support substantially consisting of aluminium oxide which is completely free of aluminium oxide of the modifications "gamma" and "delta", which contains the modification "alpha" up to a maximum of 10% by weight, the distribution of the pore diameters of which has a maximum (monomodal pore distribution) in the range of 700 to 1500 Å or 2 maxima (bimodal pore distribution) in the range of 100 to 1500 Å, the average pore diameter of which is 300 to 500 Å and the surface area of which, calculated according to the mercury porosimetry method, is between 41 and 50 m²/g, calcination is effected for 4.5 to 6.5 hours at a temperature of 1045 to 1055°C.

12. A supported catalyst, comprising a catalyst support of Claims 1 to 6 and one or more catalytically active metals and/or metal compounds.

13. The use of a spherical supported catalyst according to Claim 12 in fluidised-bed processes.

## Revendications

1. Support de catalyseur, essentiellement constitué par de l'oxyde d'aluminium activé (Al₂O₃), caractérisé par les propriétés suivantes :
aI) Il est constitué par de l'oxyde d'aluminium des formes "gamma" et "kappa", la forme "delta" étant contenue au maximum jusqu'à 10 % en poids, ou
aII)il est constitué par de l'oxyde d'aluminium des formes "theta" et "kappa", la forme "alpha" étant contenue au maximum jusqu'à 10 % en poids ;
b) la répartition des diamètres des pores présente un maximum (répartition monomodale des pores) ou deux maxima (répartition bimodale des pores) dans la plage entre 100 et 1500 Å ;
c) la surface, calculée selon la méthode de la porosimétrie au mercure, se situe entre 33 et 63 m²/g.

2. Support de catalyseur selon la revendication 1, caractérisé en ce que les formes "gamma" et "kappa" existent dans le rapport de poids 34:66 à 33:77.

3. Support de catalyseur selon la revendication 1, caractérisé en ce qu'il est constitué par de l'oxyde d'aluminium des formes "theta" et "kappa", la forme "alpha" existant au maximum jusqu'à 10 % en poids.

4. Support de catalyseur selon la revendication 3, caractérisé en ce que les formes "theta" et "kappa" existent dans le rapport de poids 30:70 à 10:90.

5. Support de catalyseur selon l'une des revendications précédentes, caractérisé en ce qu'il est essentiellement de forme sphérique.

6. Support de catalyseur selon la revendication 3, caractérisé en ce qu'il est tout à fait exempt d'oxyde d'aluminium des formes "gamma" et "delta", que la forme "alpha" est contenue au maximum jusqu'à 10 % en poids, que la répartition des diamètres des pores présente un maximum (répartition monomodale des pores) dans la plage de 700 à 1500 Å ou 2 maxima (répartition bimodale des pores) dans la plage de 100 à 1500 Å, que le diamètre moyen des pores est de 300 à 500 Å et la surface, calculée selon la méthode au mercure, est entre 41 et 50 m²/g.

7. Procédé de la fabrication d'un support de catalyseur constitué essentiellement par de l'oxyde d'aluminium (Al₂O₃), dont la répartition des diamètres des pores présente un maximum (répartition monomodale des pores) ou 2 maxima (répartition bimodale des pores) dans la plage entre 100 et 1500 Å et dont la surface, calculée selon la méthode au mercure, est entre 33 et 63 m²/g, dans lequel on mélange de l'oxyde d'aluminium amorphe (modification "chi") avec l'hydrate d'oxyde d'aluminium à l'exception β-monohydrate d'oxyde d'aluminium avec addition d'eau, en lui donnant la forme souhaitée et en le calcinant,
aI) en calcinant, pour la fabrication d'un support de catalyseur constitué par de l'oxyde d'aluminium des formes "gamma" et "kappa", dans lequel la forme "delta" est contenue au maximum jusqu'à 10 % en poids, à des températures entre 700° C et 1020° C, de préférence entre 780° C et 860° C,
aII)en calcinant, pour la fabrication d'un support de catalyseur constitué par de l'oxyde d'aluminium des formes "theta" et "kappa", dans lequel la forme "alpha" est contenue au maximum jusqu'à 10 % en poids, à des températures entre 1020 et 1070° C.

8. Procédé selon la revendication 7, caractérisé en ce que l'on forme le support de catalyseur selon la méthode de la granulation par accumulation en particules essentiellement sphériques.

9. Procédé selon la revendication 8, caractérisé en ce que l'on ajoute du grain de trop petit diamètre ou du grain de plus grand diamètre broyé provenant d'une fabrication précédente de support de catalyseur comme germinateur.

10. Procédé selon la revendication 8 ou 9, caractérisé en ce que l'on forme l'oxyde d'aluminium en particules sphériques d'un diamètre d'0,1 à 1,0 mm.

11. Procédé selon l'une des revendications 7 à 10, caractérisé en ce que, pour la fabrication d'un support de catalyseur constitué essentiellement par de l'oxyde d'aluminium qui est entièrement exempt d'oxyde d'aluminium des variétés "gamma" et "delta", qui contient la variété "alpha" au maximum jusqu'à 10 % en poids, dont la répartition des diamètres des pores présente un maximum (répartition monomodale des pores) dans la plage de 700 à 1500 Å ou 2 maxima (répartition bimodale des pores) dans la plage de 100 à 1500 Å, dont le diamètre moyen des pores est de 300 à 500 Å et dont la surface, calculée selon la méthode de la porosimétrie au mercure, se situe entre 41 et 50 m²/g, on calcine pendant 4,5 à 6,5 heures à une température de 1045 à 1055 °C.

12. Catalyseur sur support, comprenant un support de catalyseur des revendications 1 à 6 et un ou plusieurs métaux et/ou composés de métaux actifs catalytiquement.

13. Utilisation d'un catalyseur sur support sphérique selon la revendication 12 dans les procédés en couche fluidisée.
